# EUROPÄISCHE PATENTSCHRIFT

(11) **EP 3 074 543 B1**
(45) Veröffentlichungstag und Bekanntmachung des Hinweises auf die Patenterteilung: **25.03.2020**
(21) Anmeldenummer: 14795602.3
(22) Anmeldetag: 03.11.2014
(51) Int. Cl.: C21D 6/00, C21D 8/12, C22C 38/02, G01L 5/22, G01L 3/10, C21D 9/32, C21D 3/04

(54) **VERFAHREN ZUM HERSTELLEN EINES FERROMAGNETISCHEN BAUTEILS FÜR EINEN DREHMOMENTSENSOR EINER FAHRZEUGLENKWELLE UND DREHMOMENTSENSOR**
METHOD FOR PRODUCING A FERROMAGNETIC COMPONENT FOR A TORQUE SENSOR OF A VEHICLE STEERING SHAFT AND TORQUE SENSOR
PROCÉDÉ PERMETTANT DE PRODUIRE UN ÉLÉMENT FERROMAGNÉTIQUE POUR UN CAPTEUR DE COUPLE D'UN ARBRE DE DIRECTION DE VÉHICULE ET CAPTEUR DE COUPLE

(30) Priorität: 27.11.2013 DE 102013019787
(43) Veröffentlichungstag der Anmeldung: 05.10.2016
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); FROEHLICH, Ekkehart, 74321 Bietigheim-Bissingen (DE)
(74) Vertreter: Pothmann, Karsten
(86) Internationale Anmeldenummer: PCT/EP2014/073599
(87) Internationale Veröffentlichungsnummer: WO 2015/078664

(56) Entgegenhaltungen:
- DE-A1- 10 116 784
- DE-A1-102008 061 983
- DE-A1-102009 057 810
- DE-B3-102011 053 722
- DE-C1- 19 930 518
- US-A- 5 019 190
- US-B1- 6 221 501
- US-B1- 6 439 066

## Beschreibung

Die Erfindung betrifft ein Verfahren zum Herstellen eines ferromagnetischen Bauteils für einen Drehmomentsensor zum Erfassen eines auf eine Lenkwelle eines Kraftfahrzeugs aufgebrachten Drehmoments. Es wird ein Blechelement aus einem ferromagnetischen Material bereitgestellt, und das Blechelement wird dann zu dem ferromagnetischen Bauteil umgeformt. Die Erfindung betrifft außerdem einen Drehmomentsensor zum Erfassen eines auf eine Lenkwelle eines Kraftfahrzeugs aufgebrachten Drehmoments, mit zumindest einem ferromagnetischen Statorteil, das zum Leiten von magnetischem Fluss von einem Magneten hin zu zumindest einem Flussleiter des Drehmomentsensors und hierdurch zu zumindest einem Magnetsensor ausgebildet ist.

Drehmomentsensoren zur Erfassung eines auf eine Lenkwelle eines Kraftfahrzeugs aufgebrachten Drehmoments sind bereits Stand der Technik. Solche Drehmomentsensoren können beispielsweise bei elektrischen Lenksystemen eingesetzt werden. Ein Drehmomentsensor ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht, welche über einen Torsionsstab miteinander verbunden sind. An dem ersten Wellenteil ist ein Magnet - etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter geleitet, welche dann den magnetischen Fluss an einen Magnetsensor - beispielsweise einen Hall-Sensor - abgeben. Der Magnetsensor befindet sich dabei zwischen den beiden Flussleitern.

Ein solcher Drehmomentsensor ist außerdem aus dem Dokument
DE 10 2007 043 502 A1 bekannt.

Außerdem sind aus dem Stand der Technik auch Lenkwinkelsensoren bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.

Es sind auch kombinierte Sensoren bekannt, bei denen die Drehmomentsensoreinrichtung einerseits sowie die Lenkwinkelsensoreinrichtung andererseits integral als eine gemeinsame Baueinheit ausgebildet sind. Eine solche Vorrichtung mit einem Drehmomentsensor und einem Drehwinkelsensor ist beispielsweise aus dem Dokument DE 10 2010 033 769 A1 bekannt.

Aus der DE 101 16 784 A1 ist ein ringförmiger magnetostriktiver Drehmomentsensor bekannt mit einem Ringkern, der die Funktion eines Erregerkerns und Detektionskerns aufweist. Eine Erregerwicklung ist in Umfangsrichtung entlang einer Innenumfangsfläche des Ringkerns gewickelt. Eine Mehrzahl von Magnetpolvorsprüngen ragt von der Innenumfangsfläche des Ringkerns radial nach innen, und die Detektionswicklungen sind um die jeweiligen Magnetpolvorsprünge gewickelt. Auf diese Weise kann eine Mehrzahl von Detektionswicklungen ohne Steigerung der Größe oder der Kosten des Sensors angeordnet werden. Da die Erregerwicklung in Umfangsrichtung gewickelt ist, können die magnetischen Eigenschaften entlang der Umfangsrichtung ausgeglichen werden. Auf diese Weise erzielt man einen Drehmomentsensor, der zur Ausführung einer Drehmomentdetektion mit hoher Genauigkeit in der Lage ist.

Die DE 10 2008 061 983 offenbart ein Verfahren zum Herstellen eines Elektrobandes, insbesondere eines mit Eisenoxiden sowie Rein- und Mischoxiden aus den Stahlbandlegierungselementen beschichteten Stahlbandes, wobei das Stahlblechband in einem kontinuierlichen Prozess einem Behandlungsraum zugeführt wird, wobei das Elektroband hierbei mit einer Temperatur zwischen 400°C und 600°C, insbesondere 430°C bis 500°C in den Behandlungsraum zugeführt wird und dort mit einer Sauerstoffkonzentration zwischen 0,05% und 0,2% insbesondere 0,065% bis 0,1% Sauerstoff beaufschlagt wird, sowie das Elektroband und seine Verwendung.

Aus der DE 10 2011 053 722 B3 ist ein Verfahren zum Herstellen eines höherfesten nicht kornorientierten Elektrobandes bekannt, wobei aus einer Schmelze eine Bramme vergossen wird, die Bramme warmgewalzt, gegebenenfalls kann eine optionale Warmbandglühung zwischen dem Warm- und Kaltwalzen durchgeführt werden, und anschliessend kaltgewalzt wird und das Kaltband zur Erzielung eines teilrekristallisierten Gefüges zur Einstellung von Festigkeitswerten im Bereich von 450 MPa bis 800 MPa bei einer Glühtemperatur von 600°C bis 800°C, vorzugsweise 650°C bis 720°C für 60 s bis 300 s, insbesondere 60 s bis 240 s geglüht wird, insbesondere zwischen 120 s und 220 s sowie das mit dem Verfahren hergestellte Elektroband und dessen Verwendung.

Die US 6 221 501 B1 offenbart ein Verfahren zum Ausbilden einer Isolierschicht auf einem Stahlprodukt wie beispielsweise einem laminierten Elektroblech durch Aussetzen des Produktes einer sauerstoffhaltigen Atmosphäre bei einer gewissen Temperatur (beispielsweise mindestens 800°F) für eine Zeit die genügt, um eine Isolierschicht auszubilden die Hämatit umfasst.

Die bekannten Drehmomentsensoren weisen also einen Magnetkreis bestehend aus einem Ringmagneten, zwei Statorteilen mit jeweils einer umlaufenden Ringscheibe und mehreren Zahnelementen, wie auch aus zwei Flussleitern zur Konzentration des Magnetfelds auf einen Magnetfeldsensor auf. Sowohl die Statorteile als auch die Flussleiter sind dabei aus einem ferromagnetischen Material ausgebildet. An das ferromagnetische Material werden bei dieser sehr spezifischen Anwendung jedoch sehr hohe Anforderungen hinsichtlich der magnetischen Hysterese gestellt. Die Verwendung normaler Eisenwerkstoffe - wie beispielsweise Standardtiefziehqualität DC04 - ist hier nicht möglich, sondern es sind spezielle weichmagnetische Legierungen notwendig, um eine ausreichend gute Kennlinie des Drehmomentsensors, insbesondere eine geringe Hysterese, zu erhalten. Die bekannten Legierungen, welche zur Herstellung der Statorteile und der Flussleiter verwendet werden, weisen üblicherweise einen Nickelanteil (Ni) von 30% bis 80% auf. Dies hat den Nachteil, dass diese Legierungen aufgrund des hohen Nickelpreises einen beträchtlichen Kostenfaktor darstellen und die Herstellung der Drehmomentsensoren somit im Vergleich zu anderen Fahrzeugbauteilen relativ teuer ist. Außerdem ist eine Eisen-Nickel-Legierung auch mit weiteren Nachteilen hinsichtlich der Herstellung und des Ausdehnungskoeffizienten verbunden.

Es ist Aufgabe der Erfindung, ein gegenüber dem Stand der Technik verbessertes Verfahren zum Herstellen eines ferromagnetischen Bauteils für einen Drehmomentsensor einer Fahrzeuglenkwelle sowie einen verbesserten Drehmomentsensor vorzuschlagen.

Diese Aufgabe wird erfindungsgemäß durch ein Verfahren sowie durch einen Drehmomentsensor mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Herstellen eines ferromagnetischen Bauteils für einen Drehmomentsensor zum Erfassen eines auf eine Lenkwelle eines Kraftfahrzeugs aufgebrachten Drehmoments. Es wird ein Blechelement aus einem ferromagnetischen Material bereitgestellt und zu dem ferromagnetischen Bauteil umgeformt. Erfindungsgemäß ist vorgesehen, dass als das ferromagnetische Material für das Blechelement ein Elektroblech verwendet wird und das Blechelement somit aus Elektroblech bereitgestellt wird.

Anstatt eine Eisen-Nickel-Legierung für die Herstellung des ferromagnetischen Bauteils zu verwenden, wird erfindungsgemäß ein alternatives Material vorgeschlagen, nämlich das Elektroblech. Dieser weichmagnetische Werkstoff stellt eine Eisen-Silizium-Legierung dar, welche insbesondere einen Silizium-Anteil von 2% bis 4% aufweist. Die Erfindung basiert dabei auf der Erkenntnis, dass ein derartiges Elektroblech auch für die vorliegende Anwendung, nämlich für einen Drehmomentsensor einer Lenkwelle, besonders gut geeignet sein kann und außerdem auch Vorteile gegenüber einer Eisen-Nickel-Legierung aufweist. Es hat sich herausgestellt, dass gute weichmagnetische Eigenschaften auch mit einem solchen Elektroblech erzielt werden können, insbesondere mit einem nicht-kornorientierten und nicht-schlussgeglühten Elektroblech. Gegenüber einer Eisen-Nickel-Legierung weist ein Elektroblech insbesondere Vorteile hinsichtlich der Kosten, des Herstellungsaufwands und des Wärmeausdehnungskoeffizienten auf.

Gemäß einer ersten erfindungsgemäßen Option haben sich für die vorliegende Anwendung so genannte nicht-kornorientierte (NGO) Elektrobleche als besonders geeignet erwiesen, welche sowohl in Walzrichtung als auch quer dazu gleichmäßige magnetische Eigenschaften besitzen. Dies ist bei einem Drehmomentsensor deshalb vorteilhaft, da solche Drehmomentsensoren rotationssymmetrisch sind und somit in vorteilhafter Weise gleichmäßige magnetische Eigenschaften aufweisen sollen. Dies wird nun durch den Einsatz eines nicht-kornorientierten Elektrobleches gewährleistet.

Es wird grundsätzlich zwischen so genannten schlussgeglühten und nicht-schlussgeglühten Elektroblechen als Halbzeuge unterschieden. Für die Herstellung von Elektromotoren oder Transformatoren werden im Stand der Technik meist schlussgeglühte Elektrobleche verwendet, die keine weitere Wärmebehandlung zur Erzeugung der geforderten weichmagnetischen Eigenschaften benötigen. Es hat sich jedoch herausgestellt, dass für die Verwendung in einem Drehmomentsensor einer Lenkwelle diese weichmagnetischen Eigenschaften noch nicht ausreichend sind. Aus diesem Grund wird in einer zweiten erfindungsgemäßen Option eine Ausführungsform vorgeschlagen, bei der ein nicht-schlussgeglühtes

Elektroblech (semi-processed) eingesetzt wird, welches vorzugsweise nach der Formgebung bzw. nach dem Umformen zum ferromagnetischen Bauteil einer Wärmebehandlung unterzogen werden kann. Dies führt zu sehr guten Ergebnissen hinsichtlich der weichmagnetischen Eigenschaften des Drehmomentsensors und insbesondere zu einer relativ geringen magnetischen Hysterese.

In der erfindungsgemäßen Ausführungsform ist also vorgesehen, dass nach dem Umformen des Blechelements zu dem ferromagnetischen Bauteil ein Glühprozess des Bauteils durchgeführt wird. Diese Ausführungsform beruht auf der Erkenntnis, dass für die Verwendung in einem Drehmomentsensor die weichmagnetischen Eigenschaften des Elektroblechs noch nicht hundertprozentig ausreichend sind. Eine besonders gute magnetische Hysterese wird erst durch diese Wärmebehandlung des Bauteils möglich.

In diesem Zusammenhang hat sich eine Standardglühung bei Temperaturen kleiner als 840°C auch als nicht ausreichend erwiesen. Wesentlich bessere weichmagnetische Eigenschaften können erfindungsgemäß durch Glühen des Bauteils bei deutlich höheren Temperaturen größer als 850°C erreicht werden, insbesondere aus einem Wertebereich von 850°C bis 1250°C, noch bevorzugter bei einer Temperatur von 1100°C bis 1150°C.

Hierbei hat es sich des Weiteren als vorteilhaft erwiesen, wenn der erfindungsgemäße Glühprozess bzw. die Wärmebehandlung des Bauteils länger als zwei Stunden, insbesondere länger als drei Stunden, durchgeführt wird. Die Zeitdauer des Glühprozesses kann beispielsweise vier Stunden oder fünf Stunden betragen. Dies verbessert weiterhin die weichmagnetischen Eigenschaften des Drehmomentsensors.

Eine weitere Verbesserung ergibt sich, wenn der erfindungsgemäße Glühprozess des Bauteils unter einer entkohlenden Atmosphäre durchgeführt wird, insbesondere einer entkohlenden Wasserstoffatmosphäre. Dadurch kann dem Bauteil Kohlenstoff entzogen werden, was weiterhin die weichmagnetischen Eigenschaften und insbesondere die magnetische Hysterese verbessert.

Nach dem Glühprozess findet erfindungsgemäß ein Abkühlvorgang des Bauteils statt. Während dieses Abkühlvorgangs wird vorzugsweise ein Oxidationsprozess des Bauteils durchgeführt. Elektrobleche beginnen nämlich bereits bei einer geringeren Feuchtigkeitsbelastung zu korrodieren. Deshalb ist auch bei Einbau des Bauteils in ein abgedichtetes Gehäuse ein Korrosionsschutz notwendig. Hierbei haben sich die üblichen Beschichtungsverfahren, wie beispielsweise Lackieren oder eine galvanische Schutzschicht, als nachteilig erwiesen, da diese Verfahren mit zusätzlichen Arbeitsschritten mit den damit verbundenen Nachteilen verbunden sind. Aus diesem Grund wird bei dieser Ausführungsform eine gezielte Oxidation des Bauteils während des Abkühlvorgangs, d.h. unmittelbar nach dem Glühen, vorgeschlagen. Diese Vorgehensweise hat den Vorteil, dass die Oxidation des Bauteils gleichzeitig mit dem Abkühlvorgang durchgeführt wird und somit die Herstellungsdauer des Bauteils nicht beeinflusst wird. Es sind somit keine zusätzlichen Arbeitsschritte für den Korrosionsschutz notwendig.

Der Oxidationsprozess wird bevorzugt bei einer Temperatur des Bauteils kleiner als 600°C, insbesondere kleiner als 550°C, durchgeführt. Gerade bei dieser Temperatur haben sich die optimalen weichmagnetischen Eigenschaften des Bauteils bereits eingestellt.

Eine praktische Realisierung des Oxidationsprozesses besteht darin, dass der Taupunkt der Schutzgasatmosphäre durch Zumischen von Wasserdampf deutlich erhöht wird. Es bildet sich dann eine dichte Oxidschicht aus Magnetit auf dem Bauteil, die einen ausreichenden Schutz gegen Korrosion gewährleistet. Die diesbezügliche Reaktionsgleichung lautet:

3Fe + 4H₂O (g) <-> Fe₃O₄ + 4H₂ (g).

Insbesondere bei einem Durchlaufofen kann dieser Oxidationsprozess sehr günstig in der Abkühlzone integriert werden, sodass kein zusätzliches Hantieren bzw. keine zusätzliche Handhabung der Bauteile erfolgen muss. Außerdem kann hier die Restwärme genutzt werden, sodass die Bauteile nicht erneut erwärmt zu werden brauchen.

Also kann der Glühprozess in einem Durchlaufofen durchgeführt werden. Die Verwendung eines Durchlaufofens hat neben dem bereits genannten Vorteil der Handhabung und des Vorhandenseins von Restwärme zusätzlich auch den Vorteil, dass durch Vorsehen einer geeigneten Gasführung eine Atmosphärentrennung zwischen dem Glühbereich mit niedrigem und dem Oxidationsbereich mit hohem Taupunkt ohne viel Aufwand ermöglicht werden kann.

Als Bauteil für den Drehmomentsensor wird vorzugsweise ein Statorteil zum Leiten von magnetischem Fluss hergestellt, welches eine Ringscheibe und eine Vielzahl von in Umfangsrichtung der Ringscheibe verteilt angeordneten und von der Ringscheibe in axialer Richtung abstehenden bzw. abgebogenen Zahnelementen aufweist.

Diese Statorteile werden üblicherweise aus einem Bandmaterial mittels Stanzbiegens hergestellt. Das Umformen wird hier also durch das Stanzbiegen realisiert. Allerdings hat sich nun herausgestellt, dass die am besten geeigneten Elektrobleche relativ spröde sind. Um das Risiko des Reißens beim Biegen der Zahnelemente zu verringern, wird in einer Ausführungsform vorgeschlagen, dass beim Umformen des Blechelements zu dem Statorteil ein Biegen der Zahnelemente mit einem relativ großen Biegeradius durchgeführt wird, nämlich von 0,8 mm bis 2 mm.

Ergänzend oder alternativ kann als Bauteil für den Drehmomentsensor auch ein Flussleiter hergestellt werden, welcher zum Leiten von magnetischem Fluss von dem Statorteil zu einem Magnetsensor dient. Mittels dieses Flussleiters wird das Magnetfeld also auf den Magnetsensor konzentriert.

Die Erfindung kann auch ein Verfahren zum Herstellen eines Drehmomentsensors selbst betreffen, bei welchem für den Drehmomentsensor zunächst ein Bauteil nach dem oben beschriebenen erfindungsgemäßen Verfahren hergestellt wird und anschließend der Drehmomentsensor unter Verwendung dieses Bauteils montiert wird. Der Drehmomentsensor ist zum Erfassen eines auf eine Lenkwelle eines Kraftfahrzeugs aufgebrachten Drehmoments ausgebildet.

Die Erfindung betrifft außerdem einen Drehmomentsensor zum Erfassen eines auf eine Lenkwelle eines Kraftfahrzeugs aufgebrachten Drehmoments, mit zumindest einem ferromagnetischen Statorteil, das zum Leiten von magnetischem Fluss von einem Magneten hin zu zumindest einem Flussleiter des Drehmomentsensors und durch den Flussleiter zu zumindest einem Magnetsensor ausgebildet ist. Der Flussleiter dient zum Konzentrieren des magnetischen Flusses an dem Magnetsensor. Erfindungsgemäß ist das Statorteil und/oder der Flussleiter aus Elektroblech ausgebildet.

Die mit Bezug auf das erfindungsgemäße Verfahren vorgestellten bevorzugten Ausführungsformen und deren Vorteile gelten entsprechend für den erfindungsgemäßen Drehmomentsensor.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Explosionsdarstellung eine integrierte Vorrichtung für ein Kraftfahrzeug mit einem Drehmomentsensor und einem Lenkwinkelsensor;
- Fig. 2: in vergrößerter Darstellung einen Bereich der Vorrichtung gemäß Fig. 1;

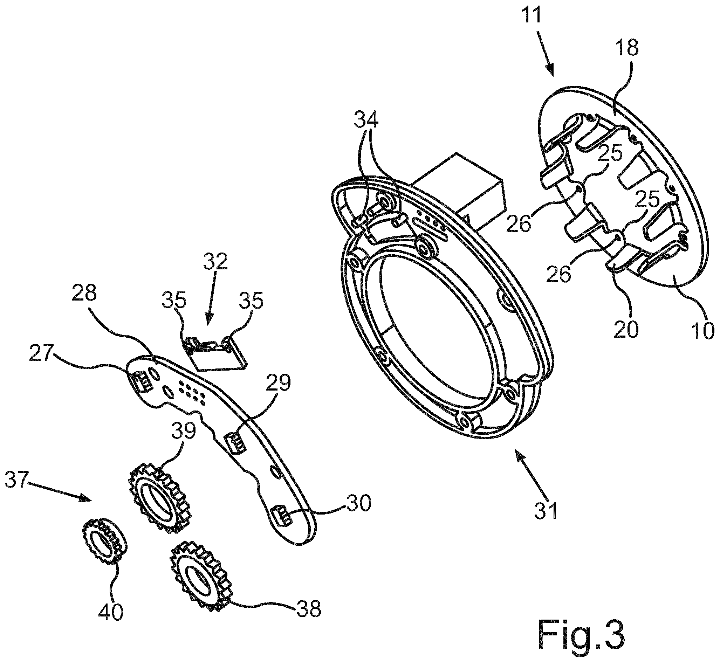

- Fig. 3: in vergrößerter Darstellung einen weiteren Bereich der Vorrichtung gemäß Fig. 1; und
- Fig. 4: ein Flussdiagramm eines Verfahrens gemäß einer Ausführungsform der Erfindung.

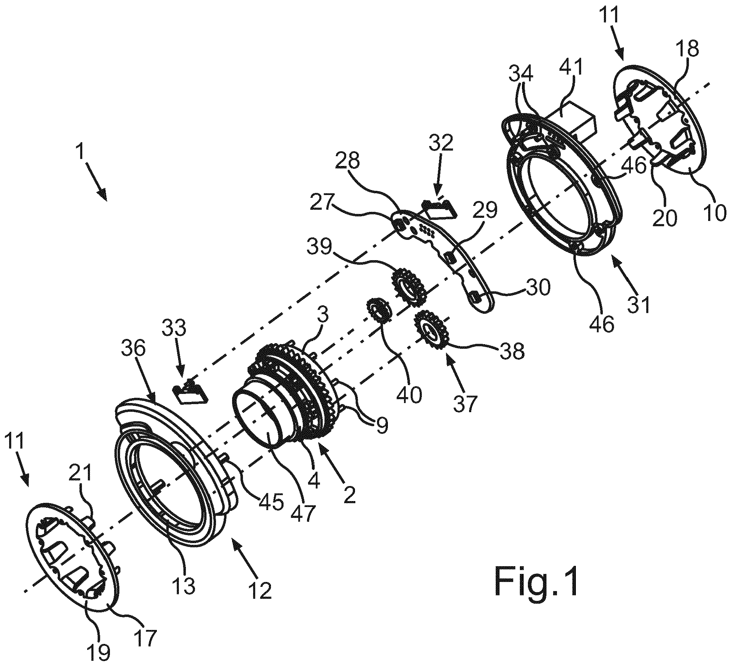

Eine in Fig. 1 dargestellte und insgesamt mit 1 bezeichnete Vorrichtung gemäß einer Ausführungsform der Erfindung umfasst sowohl einen Drehmomentsensor als auch einen Lenkwinkelsensor. Der Drehmomentsensor dient zum Messen eines auf eine Lenkwelle eines Kraftfahrzeugs aufgebrachten Drehmoments. Der Lenkwinkelsensor dient zur Erfassung des aktuellen Lenkwinkels der Lenkwelle. Die Vorrichtung 1 ist als eine integrale Baueinheit ausgebildet, so dass eine integrale Sensorvorrichtung geschaffen wird, welche sowohl zur Erfassung des Drehmoments als auch zum Messen des Lenkwinkels ausgebildet ist.

Die Lenkwelle des Fahrzeugs beinhaltet zwei Wellenteile, welche über einen in den Fig. nicht dargestellten Torsionsstab miteinander verbunden sind. An einem der Wellenteile wird ein Halter 2 drehfest angebracht, während an dem anderen Wellenteil ein in den Fig. nicht dargestellter Magnet - nämlich Permanentmagnet beispielsweise in Form eines Ringmagneten - drehfest gehalten ist. Der Halter 2 kann ein einstückig ausgebildetes Kunststoffteil und/oder ein Gussbauteil sein. Optional kann der Halter 2 auch mit einer Hülse 47, zum Beispiel aus Metall, oder aber anderen Befestigungselementen wie Laschen, Haken, Clipsen und dergleichen versehen sein, um den Halter 2 an dem zugeordneten Wellenteil zu befestigen.

Die Komponenten des Drehmomentsensors sind im Wesentlichen: der genannte Permanentmagnet, ein magnetischer Stator 11 mit zwei gleichen Statorteilen 10, 17, zwei Flussleiter 32, 33 sowie ein Magnetsensor 27, der an einer Leiterplatte 28 platziert ist. Zum Lenkwinkelsensor gehören hingegen: zwei Magnetfelddetektoren bzw. Magnetsensoren 29, 30, ein Getriebe 37 mit Drehübertragungselementen, welche als Zahnräder 38, 39, 40 ausgebildet sind, sowie ein Rotor 15, der an den Halter 2 angespritzt ist.

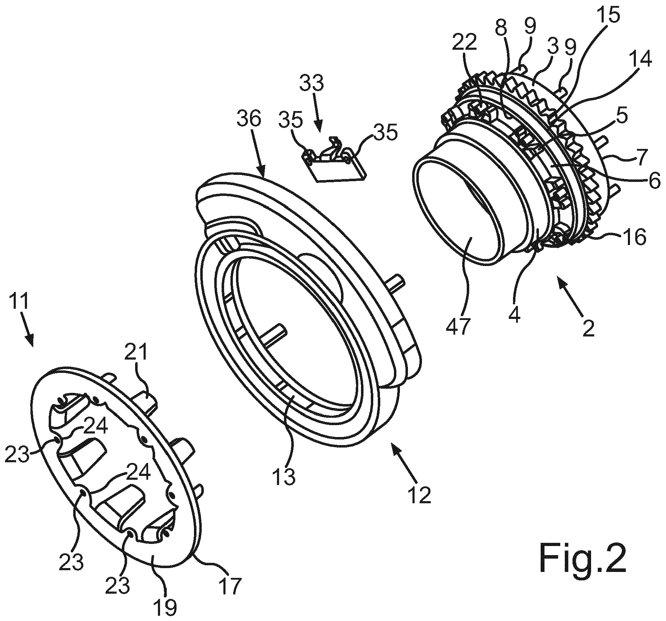

Der Halter 2 umfasst, wie insbesondere aus Fig. 2 hervorgeht, zwei axial nebeneinander angeordnete zylindrische Bereiche, nämlich einerseits einen ersten zylindrischen axialen Bereich 3 sowie einen in axialer Richtung versetzt angeordneten sowie konzentrisch zum ersten Bereich 3 liegenden und einen etwas geringeren Durchmesser aufweisenden zweiten axialen Bereich 4. Der erste axiale Bereich 3 ist über eine Vielzahl von in Umfangsrichtung verteilt angeordneten, strebenförmigen bzw. speichenförmigen Verbindungselementen 5 mit dem zweiten axialen Bereich 4 verbunden. Zwischen den Verbindungselementen 5 sind radiale Aussparungen 6 ausgebildet, welche Durchgangsöffnungen sind.

Der erste axiale Bereich 3 hat zwei axiale Randkanten, nämlich einerseits eine erste äußere Randkante 7 sowie andererseits eine zweite axiale Randkante 8, welche dem zweiten axialen Bereich 4 zugewandt ist.

An der ersten axialen Randkante 7 sind eine Vielzahl von axialen Stiften bzw. Bolzen 9 ausgebildet, welche als axiale Fortsätze in axialer Richtung parallel zueinander von der Kante 7 abstehen. Über diese Stifte 9 wird der Halter 2 mit einem ersten Statorteil 10 des insgesamt mit 11 bezeichneten Stators verbunden.

Zur Vorrichtung 1 gehört außerdem ein Gehäuse 12, welches zusätzlich auch die Funktion eines Gleitstücks aufweist. Das Gehäuse 12 hat eine innere Hülse 13, welche ringförmig umlaufend ausgebildet ist und in welche der erste axiale Bereich 3 des Halters 2 aufgenommen wird, so dass der äußere Umfang des ersten Bereiches 3 des Halters 2 an einem inneren Umfang der Hülse 13 gleiten kann. Dabei wird der erste axiale Bereich 3 des Halters 2 in die Hülse 13 bis hin zu einem Flansch 14 des Halters 2 eingesteckt, welcher durch einen Rotor 15 mit einer Zahnstruktur 16 gebildet ist. Der Rotor 15 mit der Zahnstruktur 16 ist dabei an dem ersten axialen Bereich 3 angespritzt.

Neben dem ersten Statorteil 10 weist der Stator 11 zusätzlich auch ein zweites Statorteil 17 auf. Jedes Statorteil 10, 17 ist jeweils einstückig ausgebildet und weist ein ringförmiges, flanschartiges und sich in radialer Richtung nach außen erstreckendes Randelement 18 bzw. 19 auf, wie auch eine Vielzahl von Zahnelementen 20 bzw. 21. Die Zahnelemente 20, 21 stehen von dem jeweiligen Randelement 18, 19 in axialer Richtung ab, und zwar in Richtung zum ersten axialen Bereich 3 des Halters 2 hin. Die Zahnelemente 20, 21 erstrecken sich somit in axialer Richtung etwa parallel zu einer Drehachse der Lenkwelle. Die beiden Statorteile 10, 17 sind dabei gleich ausgebildet, so dass auch die Anzahl der Zahnelemente 20 des ersten Statorteils 10 gleich der Anzahl der Zahnelemente 21 des zweiten Statorteils 17 ist.

Zur Befestigung des Stators 11 an dem Halter 2 wird einerseits das Statorteil 17 auf den zweiten axialen Bereich 4 des Halters 2 aufgesteckt, so dass die Zahnelemente 21 durch die Aussparungen 6 zwischen den Verbindungselementen 5 axial hindurch gesteckt und an einem Innenumfang des ersten axialen Bereiches 3 des Halters 2 abgestützt werden. Nach dem Aufstecken des Statorteils 17 auf den zweiten Bereich 4 des Halters 2 sind die Zahnelemente 21 im Inneren des ersten axialen Bereiches 3 des Halters 2 angeordnet, so dass lediglich das Randelement 19 radial nach außen hin absteht und an der axialen Randkante 8 des ersten axialen Bereichs 3 des Halters 2 axial abgestützt ist.

Beim Aufstecken des Statorteils 17 auf den zweiten axialen Bereich 4 des Halters 2 werden an den Verbindungselementen 5 im Bereich der Randkante 8 ausgebildete Stifte 22 des ersten axialen Bereiches 3 in korrespondierende Durchgangsöffnungen 23 aufgenommen und durch diese Durchgangsöffnungen 23 hindurch gesteckt, welche in dem Randelement 19 des Statorteils 17 ausgebildet sind. Diese Durchgangsöffnungen 23 sind in jeweiligen Laschen 24 ausgebildet, welche in Richtung zum Zentrum des Stators 11 radial nach innen hin abstehen bzw. zum Zentrum hin zeigen. Zwischen jeweils zwei benachbarten Zahnelementen 21 ist dabei jeweils eine solche Lasche 24 mit einer Durchgangsöffnung 23 vorgesehen.

Nach Aufstecken des Statorteils 17 auf den zweiten axialen Bereich 4 des Halters 2 und somit nach Aufnehmen der Stifte 22 in die Durchgangsöffnungen 23 können die freien Enden der Stifte 22 umgeformt und somit zu Nietköpfen verarbeitet werden, um einen sicheren Sitz des Statorteils 17 an dem Halter 2 zu gewährleisten.

Das andere Statorteil 10 wird an dem Halter 2 derart befestigt, dass die Zahnelemente 20 in das Innere des ersten axialen Bereiches 3 des Halters 2 von der dem Statorteil 17 gegenüberliegenden axialen Stirnseite des Halters 2 bzw. von der Seite der Randkante 7 eingesteckt werden. Dabei gleiten die Zahnelemente 20 an dem Innenumfang des zylindrischen Bereiches 3. Im zusammengebauten Zustand befinden sich die Zahnelemente 20 jeweils zwischen zwei benachbarten Zahnelementen 21 des anderen Statorteils 17 und liegen an dem Innenumfang des Bereichs 3 an. Auch das Statorteil 10 weist eine Vielzahl von Laschen 25 auf, in denen jeweils eine Durchgangsöffnung 26 ausgebildet ist. Durch diese Durchgangsöffnungen 26 werden die korrespondierenden Stifte 9 hindurch gesteckt, die an der Randkante 7 des Halters 2 ausgebildet sind. Die freien Enden dieser Stifte 9 werden zu Nietköpfen umgeformt und somit eine sichere Befestigung des Statorteils am Halter 2 gewährleistet.

Grundsätzlich können die beiden Statorteile 10, 17 auf verschiedenste Arten an dem Halter 2 fixiert werden. Die Kombination aus Stiften 9 bzw. 22 und Durchgangsöffnungen 26 bzw. 23 stellt lediglich eine beispielhafte Ausführungsform dar. Es ist beispielsweise auch möglich, die Statorteile 10, 17 an dem Halter 2 über Halteringe zu fixieren, welche per Laserschweißen oder aber Ultraschallschweißen an dem Halter 2 fixiert werden.

Der Drehmomentsensor weist einen Magnetsensor 27 auf, welcher auf einer Leiterplatte 28 angeordnet ist. Der Magnetsensor 27 ist beispielsweise als elektronisches SMD-Bauelement ausgebildet, welches mittels lötfähiger Anschlussflächen direkt auf die Leiterplatte 28 gelötet wird. Die entsprechende Technik wird als "Oberflächenmontage" (Surface-Mounting-Technology) bezeichnet. Die Leiterplatte 28 ist eine gemeinsame Platine sowohl für den Magnetsensor 27 des Drehmomentsensors als auch für Bauelemente des Lenkwinkelsensors. An der Leiterplatte 28 sind nämlich auch Magnetfelddetektoren bzw. Sensorelemente 29, 30 des Lenkwinkelsensors angeordnet, welche ebenfalls als SMD-Bauelemente ausgebildet sind.

Zum Verschließen des Gehäuses 12 umfasst die Vorrichtung 1 einen Deckel 31.

Die Vorrichtung 1 umfasst außerdem im Ausführungsbeispiel zwei Flussleiter 32, 33, welche zum Drehmomentsensor gehören. Die beiden Flussleiter 32, 33 werden einerseits an dem Deckel 31 und andererseits am Gehäuse 12 befestigt. Der Deckel 31 weist dazu zwei Stifte 34 auf, welche durch korrespondierende Durchgangsöffnungen 35 im Flussleiter 32 hindurch gesteckt werden. Entsprechende Stifte sind auch auf der Seite des Gehäuses 12 für den zweiten Flussleiter 33 bereitgestellt. Durch Umformung der Stifte 34 können Nietköpfe gebildet werden, welche eine wirkungsvolle und betriebssichere Fixierung der Flussleiter 32, 33 an dem Deckel 31 bzw. dem Gehäuse 12 gewährleisten.

Das Gehäuse 12 weist eine Aufnahme 36 auf, in welche sowohl die Leiterplatte 28 mit den Bauelementen 27, 29, 30 als auch ein Zahnradgetriebe 37 der Lenkwinkelsensoreinrichtung aufgenommen werden können. Das Zahnradgetriebe 37 hat zwei Zahnräder 38, 39, deren Zähne in jene des Rotors 15 greifen und auf diese Weise mit dem Rotor 15 bzw. dem Halter 2 drehbar gekoppelt sind. Im Zahnrad 38 ist ein Permanentmagnet angeordnet. Die Rotationsachse des Zahnrads 38 ist dabei parallel zur Drehachse der Lenkwelle. Ein zweites Teilsensorsystem der Lenkwinkelsensoreinrichtung umfasst das Zahnrad 39, welches als Zwischenzahnrad mit einem Antriebszahnrad bzw. Ritzel 40 drehbar gekoppelt ist. Das Antriebszahnrad 40 enthält wiederum einen Permanentmagneten. Die Zahnräder 38, 39, 40 werden in der Aufnahme 36 des Gehäuses 12 untergebracht und darin drehbar gelagert. In der Aufnahme 36 ist eine Innenverzahnung vorhanden, an der das Antriebszahnrad 40 entlang einer Zykloide abrollen kann. Die Bohrung des Zahnrads 39 ist hierzu exzentrisch ausgebildet. Die Leiterplatte 28 und der Deckel 31 sind gegenstückig zur Aufnahme 36 ausgebildet und schließen das Getriebe 37 von oben her ein. Die Magnetfelddetektoren 29, 30 sind im Ausführungsbeispiel Hall-Sensoren. Die Magnetfelddetektoren 29, 30 kommen gegenüber den Permanentmagneten der Zahnräder 40 bzw. 38 zu liegen. Sie stehen dabei senkrecht zur Rotationsachse der Zahnräder 38, 39. Der Magnetfelddetektor 29 kommt auf der Drehachse des Zahnrads 39 zu liegen, während der Magnetfelddetektor 30 senkrecht zur Drehachse des Zahnrads 38 sitzt.

In typischen Fahrzeuglenkungen wird ein Bereich von fünf bis sieben vollen Umdrehungen der Lenkwelle eindeutig erfasst. Um auch bei mehr als einer vollen Umdrehung der Lenkwelle den absoluten Drehwinkel eindeutig zu bestimmen, werden zwei Baugruppen eingesetzt. Die eine Baugruppe bildet einen Umdrehungssensor (Revolution Sensor) und umfasst die Zahnräder 39, 40 und den Magnetfelddetektor 29. Es wird beispielsweise ein Übersetzungsverhältnis von Rotor 15 zu Zahnrad 40 von 6:1 gewählt. Die andere Baugruppe dient der Feinbestimmung des Drehwinkels (Angle Sensor) und umfasst im Wesentlichen das Zahnrad 38 mit seinem Permanentmagneten sowie den Magnetfelddetektor 30. Für das Übersetzungsverhältnis von Rotor 15 zu Zahnrad 38 wird beispielsweise ein Wert von 1:3 gewählt. Aus den beiden mit den Magnetfelddetektoren 29, 30 gemessenen Zahnradwinkeln kann dann in bekannter Weise über das Nonius-Prinzip der Drehwinkel der Lenkwelle unmittelbar berechnet werden. Geeignete Berechnungsverfahren hierfür sind aus dem Stand der Technik bekannt und beispielsweise in der DE 195 06 938 A1 und DE 199 62 241 A1 offenbart.

Alternativ kann auch ein "kleiner Nonius" für das Übersetzungsverhältnis gewählt werden, um den aktuellen Lenkwinkel bestimmen zu können. Es kann dabei auf das Zahnrad 40 verzichtet werden, und die beiden Zahnräder 38, 39 können mit jeweils einem Magneten versehen werden. Die Zahnräder 38, 39 weisen dann unterschiedliche Anzahl von Zähnen auf, sodass sich auf den vollen Lenkwinkelbereich von 5 bis 7 Umdrehungen der Lenksäule beispielsweise das Zahnrad 39 einmal öfter als das Zahnrad 38 dreht. Auch somit kann auf den tatsächlichen Lenkwinkel zurückgeschlossen werden.

In den Deckel 31 kann auch ein Stecker 41 integriert sein, über welchen die Bauelemente 27, 29, 30 an ein externes Steuergerät elektrisch angeschlossen werden können. Über den Stecker 41 wird also eine elektrische Verbindung zwischen der Vorrichtung 1 einerseits und einem Steuergerät andererseits bereitgestellt.

Werden die Flussleiter 32, 33 an dem Deckel 31 bzw. dem Gehäuse 12 befestigt, so erstrecken sich die Flussleiter 32, 33 in radialer Richtung und somit parallel zu den Randelementen 18, 19. Die beiden Flussleiter 32, 33 sind dabei auf einander gegenüberliegenden axialen Seiten der Leiterplatte 28 angeordnet, wobei zumindest einer der Flussleiter 32, 33 auch axial zwischen den Randelementen 18, 19 liegt. Der Flussleiter 32 liegt dabei in einem geringen Abstand zum Randelement 18, während der zweite Flussleiter 33 in einem geringen Abstand zum Randelement 19 angeordnet ist.

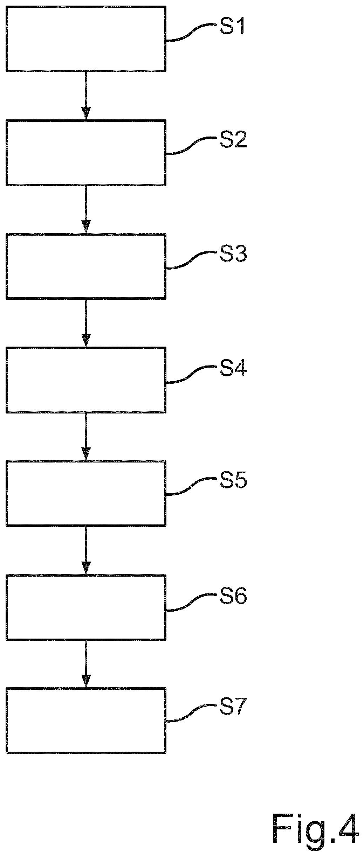

Nun richtet sich das Interesse auf die Herstellung der weichmagnetischen bzw. ferromagnetischen Bauteile, nämlich der Statorteile 10, 17 einerseits sowie der Flussleiter 32, 33 andererseits. Ein Verfahren zum Herstellen dieser Bauteile 10, 17, 32, 33 wird nun unter Bezugnahme auf das Flussdiagramm gemäß Fig. 4 näher erläutert. Gemäß Schritt S1 wird ein Elektroblech in Form eines Bandmaterials als Halbzeug bereitgestellt. Das Elektroblech ist ein nicht-schlussgeglühtes sowie nicht-kornorientiertes Elektroblech. In einem weiteren Schritt S2 wird von dem Bandmaterial ein Blechelement mithilfe eines geeigneten Trennverfahrens abgetrennt, zum Beispiel durch Schneiden. In einem weiteren Schritt S3 erfolgt ein Umformprozess: Das Blechelement wird zu dem Bauteil 10, 17, 32, 33 umgeformt. Das Umformen erfolgt beispielsweise mittels Stanzbiegens. Hierbei wird insbesondere bei den Statorteilen 10, 17 darauf geachtet, dass beim Biegen der Zahnelemente 20, 21 ein entsprechender Biegeradius eingestellt wird, nämlich von 0,8 mm bis 2 mm. Dies kann auch für die beiden Flussleiter 32, 33 gelten.

Die Bauteile 10, 17, 32, 33 werden dann in einem weiteren Schritt S4 einem Durchlaufofen zugeführt. In einem Schritt S5 wird zunächst ein Glühprozess bei einer Temperatur von beispielsweise 1150°C und einer entsprechend langen Dauer bis zu mehreren Stunden und gleichzeitig einer entkohlenden Wasserstoffatmosphäre durchgeführt. Dieser Glühprozess der Bauteile 10, 17, 32, 33 kann beispielsweise vier oder fünf Stunden dauern. In einem weiteren Schritt S6 erfolgt im Anschluss an das Glühen ein Abkühlen der Bauteile 10, 17, 32, 33. Während des Abkühlvorgangs wird ein Oxidationsprozess durchgeführt, indem beispielsweise Wasserdampf zugeführt wird. Hier findet folgende Reaktion statt:

3Fe + 4H₂O (g) <> Fe₃O₄ + 4H₂ (g).

Der Oxidationsprozess wird dabei vorzugsweise erst dann eingeleitet, wenn die Temperatur der Bauteile 10, 17, 32, 33 zum Beispiel 550°C unterschreitet. Das Verfahren endet dann in einem Schritt S7.

Das Verfahren kann insgesamt folgendermaßen zusammengefasst werden:
Anstatt des teuren Nickelmaterials soll für die Statoren ein preiswerteres FeSi-Material aus dem Elektroblechsektor verwendet werden. Geeignet sind so genannte nicht-kornorientierte (NGO) Elektrobleche, welche sowohl in Walzrichtung als auch quer dazu gleichmäßige magnetische Eigenschaften besitzen. Dies ist vorteilhaft, da die Statoren rotationssymmetrisch sind.

Solche NGO-Elektrobleche sind in unterschiedlichen Dicken und magnetischen Qualitäten weit verbreitet für die Herstellung von Elektromotoren oder Transformatoren. Hier werden meist so genannte schlussgeglühte Qualitäten verwendet (fully processed), die keine weitere Wärmebehandlung zur Erzeugung der geforderten weichmagnetischen Eigenschaften brauchen. Für die Verwendung in einem Drehmomentsensor sind diese jedoch noch nicht ausreichend. Eine Alternative sind nicht-schlussgeglühte Elektrobleche (semi-processed), die nach der Formgebung einer Wärmebehandlung unterzogen werden. Typischerweise erfolgt diese bei Temperaturen kleiner als 840°C. Die bei dieser Standardglühung erreichbaren weichmagnetischen Eigenschaften sind jedoch ebenfalls noch nicht ausreichend. Wesentlich bessere weichmagnetische Eigenschaften können durch Glühen bei deutlich höheren Temperaturen von bis zu 1150°C, einer entsprechend langen Dauer bis zu mehreren Stunden und gleichzeitig einer entkohlenden Wasserstoffatmosphäre mit sehr niedrigem Taupunkt erreicht werden. Der Glühprozess kann entweder chargenweise in einem Haubenofen oder kontinuierlich in einem Durchlaufofen erfolgen. Die besten weichmagnetischen Eigenschaften werden durch Wahl eines Halbzeugs mit niedrigem Wattverlust erzielt. Der für die Hysterese des Drehmomentsensors wichtige Parameter Koerzitivfeldstärke kann deutlich unter 25A/m liegen, was wesentlich unter dem üblichen Wert für die Standardanwendungen liegt.

Die Statoren werden üblicherweise aus Bandmaterial mittels Stanzbiegens hergestellt. Allerdings sind die am besten geeigneten Elektrobleche eher spröde. Um das Risiko des Reißens beim Biegen der Finger zu verringern, ist ein entsprechend großer Biegeradius notwendig. Dies erschwert auch, den Rand des Stators zu kröpfen oder zu profilieren. Ein flacher Rand des Stators ist also vorzuziehen.

Elektrobleche beginnen bereits bei geringer Feuchtigkeitsbelastung zu korrodieren. Deshalb ist auch bei Einbau in gedichtete Gehäuse ein Korrosionsschutz notwendig. Die üblichen Beschichtungsverfahren wie Lackieren oder eine galvanische Schutzschicht sind zusätzliche Arbeitsschritte mit entsprechenden Kosten und scheiden deshalb aus. Vorgeschlagen wird eine gezielte Oxidation der Bauteile während der Abkühlphase, also nach dem Glühen auf optimale weichmagnetische Eigenschaften, typischerweise im Temperaturbereich unter 550°C. Dazu wird der Taupunkt der Schutzgasatmosphäre deutlich erhöht (durch Zumischen von Wasserdampf). Es bildet sich eine dicke Oxidschicht bzw. Passivierungsschicht aus Magnetit auf dem Eisenblech, die einen ausreichenden Schutz der Bauteile gegen Korrosion bietet.

Insbesondere bei einem Durchlaufofen kann dieser Schritt günstig in der Abkühlzone integriert werden, sodass kein zusätzliches Hantieren der Bauteile erfolgen muss. Außerdem kann die Restwärme genutzt werden und es muss nicht nochmals erwärmt werden. Eine geeignete Gasführung sorgt dabei für eine Atmosphärentrennung zwischen dem Glühbereich mit niedrigem und dem Oxidationsbereich mit hohem Taupunkt.

## Patentansprüche

1. Verfahren zum Herstellen eines ferromagnetischen Bauteils (10, 17, 32, 33) für einen Drehmomentsensor zum Erfassen eines auf eine Lenkwelle eines Kraftfahrzeugs aufgebrachten Drehmoments, mit den Schritten:
- Bereitstellen eines Blechelements aus einem nicht-kornorientierten Elektroblech oder einem nicht-schlussgeglühten Elektroblech und
- Umformen des Blechelements zu dem ferromagnetischen Bauteil (10, 17, 32, 33),
**dadurch gekennzeichnet, dass**
nach dem Umformen ein Glühprozess des Bauteils (10, 17, 32, 33) durchgeführt wird, wobei
- während des Glühprozesses das Bauteil (10, 17, 32, 33) einer Temperatur größer als 850°C ausgesetzt wird, insbesondere größer als 1100°C, bevorzugt einer Temperatur von 1100°C bis 1150°C,
- der Glühprozess des Bauteils (10, 17, 32, 33) länger als 2 Stunden, insbesondere länger als 3 Stunden, durchgeführt wird,
- der Glühprozess des Bauteils (10, 17, 32, 33) unter einer entkohlenden Wasserstoff-Atmosphäre durchgeführt wird und
- während eines Abkühlvorgangs nach dem Glühprozess ein Oxidationsprozess bzw. Passivierungsprozess des Bauteils (10, 17, 32, 33) durchgeführt wird.

2. Verfahren nach Anspruch 1,
**dadurch gekennzeichnet, dass**
der Oxidationsprozess bzw. Passivierungsprozess bei einer Temperatur des Bauteils (10, 17, 32, 33) kleiner als 600°C, insbesondere kleiner als 550°C, durchgeführt wird.

3. Verfahren nach Anspruch 1 oder 2,
**dadurch gekennzeichnet, dass**
der Oxidationsprozess bzw. Passivierungsprozess durch Zuführen von Wasserdampf durchgeführt wird.

4. Verfahren nach einem der Ansprüche 1 bis 3,
**dadurch gekennzeichnet, dass**
der Glühprozess in einem Durchlaufofen durchgeführt wird.

5. Verfahren nach einem der vorhergehenden Ansprüche,
**dadurch gekennzeichnet, dass**
als Bauteil (10, 17, 32, 33) für den Drehmomentsensor ein Statorteil (10, 17) zum Leiten von magnetischem Fluss hergestellt wird, welches eine Ringscheibe (18, 19) und eine Vielzahl von in Umfangsrichtung der Ringscheibe (18, 19) verteilt angeordneten und von der Ringscheibe (18, 19) in axialer Richtung abstehenden Zahnelementen (20, 21) aufweist.

6. Verfahren nach Anspruch 5,
**dadurch gekennzeichnet, dass**
beim Umformen des Blechelements zu dem Statorteil (10, 17) ein Biegen der Zahnelemente (20, 21) mit einem Biegeradius von 0,8 mm bis 2 mm durchgeführt wird.

7. Verfahren nach einem der vorhergehenden Ansprüche,
**dadurch gekennzeichnet, dass**
als Bauteil (10, 17, 32, 33) für den Drehmomentsensor ein Flussleiter (32, 33) zum Leiten von magnetischem Fluss von einem Statorteil (10, 17) zu einem Magnetsensor (27) hergestellt wird.

8. Drehmomentsensor zum Erfassen eines auf eine Lenkwelle eines Kraftfahrzeugs aufgebrachten Drehmoments, mit zumindest einem ferromagnetischen Statorteil (10, 17), das zum Leiten von magnetischem Fluss von einem Magneten hin zu zumindest einem Flussleiter (32, 33) des Drehmomentsensors und hierdurch zu zumindest einem Magnetsensor (27) ausgebildet ist,
**dadurch gekennzeichnet, dass**
das Statorteil (10, 17) und/oder der Flussleiter (32, 33) aus einem nach dem Umformungsprozess und dem Glühprozess gemäß einem der Ansprüche 1 bis 7 geglühten Elektroblech ausgebildet ist.

## Claims

1. Method for producing a ferromagnetic component (10, 17, 32, 33) for a torque sensor for detecting a torque applied to a steering shaft of a motor vehicle, having the following steps:
- providing a sheet-metal element from a non-grain-oriented electrical steel sheet or from a semi-processed electrical steel sheet and
- deforming the sheet-metal element to give the ferromagnetic component (10, 17, 32, 33),
**characterized in that**
after the deforming, an annealing process of the component (10, 17, 32, 33) is carried out, wherein
- during the annealing process, the component (10, 17, 32, 33) is subjected to a temperature of greater than 850°C, in particular greater than 1100°C, preferably a temperature of 1100°C to 1150°C,
- the annealing process of the component (10, 17, 32, 33) is carried out for longer than 2 hours, in particular longer than 3 hours,
- the annealing process of the component (10, 17, 32, 33) is carried out in a decarbonizing hydrogen atmosphere and
- during a cooling-down procedure after the annealing process, an oxidation process or a passivation process of the component (10, 17, 32, 33) is carried out.

2. Method according to Claim 1,
**characterized in that**
the oxidation process or passivation process is carried out at a temperature of the component (10, 17, 32, 33) of less than 600°C, in particular less than 550°C.

3. Method according to Claim 1 or 2,
**characterized in that**
the oxidation process or passivation process is carried out by supplying water vapour.

4. Method according to one of Claims 1 to 3,
**characterized in that**
the annealing process is carried out in a continuous furnace.

5. Method according to one of the preceding claims,
**characterized in that**
as a component (10, 17, 32, 33) for the torque sensor, a stator part (10, 17) for conducting magnetic flux is produced, which stator part has an annular disc (18, 19) and a plurality of tooth elements (20, 21) which are arranged distributed in the circumferential direction of the annular disc (18, 19) and which protrude from the annular disc (18, 19) in an axial direction.

6. Method according to Claim 5,
**characterized in that**
when the sheet-metal element is deformed to give the stator part (10, 17), a bending of the tooth elements (20, 21) with a bend radius of 0.8 mm to 2 mm is carried out.

7. Method according to one of the preceding claims,
**characterized in that**
as a component (10, 17, 32, 33) for the torque sensor, a flux conductor (32, 33) for conducting magnetic flux from a stator part (10, 17) to a magnetic sensor (27) is produced.

8. Torque sensor for detecting a torque applied to a steering shaft of a motor vehicle, having at least one ferromagnetic stator part (10, 17) which is configured to conduct magnetic flux from a magnet to at least one flux conductor (32, 33) of the torque sensor and through it to at least one magnetic sensor (27),
**characterized in that**
the stator part (10, 17) and/or the flux conductor (32, 33) is formed from an electrical steel sheet annealed by the deformation process and the annealing process according to one of Claims 1 to 7.

## Revendications

1. Procédé destiné à fabriquer un composant ferromagnétique (10, 17, 32, 33) pour un capteur de couple destiné à détecter un couple de rotation appliqué à un arbre de direction d'un véhicule automobile, comprenant les étapes suivantes :
- mise à disposition d'un élément de tôle constitué d'une tôle électrique à grains non orientés ou d'une tôle électrique non soumise à un recuit final, et
- déformation de l'élément de tôle de manière à former le composant ferromagnétique (10, 17, 32, 33),
**caractérisé en ce que**
- une opération de recuit du composant (10, 17, 32, 33) est exécutée après la déformation, dans lequel
- pendant l'opération de recuit, le composant (10, 17, 32, 33) est exposé à une température supérieure à 850 °C, en particulier supérieure à 1100 °C, de préférence une température entre 1100 °C et 1150 °C,
- l'opération de recuit du composant (10, 17, 32, 33) est exécutée pendant plus de deux heures, en particulier plus de trois heures,
- l'opération de recuit du composant (10, 17, 32, 33) est exécutée dans une atmosphère d'hydrogène décarburante, et
- une opération d'oxydation ou une opération de passivation du composant (10, 17, 32, 33) est exécutée pendant une opération de refroidissement suite à l'opération de recuit.

2. Procédé selon la revendication 1,
**caractérisé en ce que**
l'opération d'oxydation ou l'opération de passivation est exécutée tandis que le composant (10, 17, 32, 33) est à une température inférieure à 600 °C, en particulier inférieure à 550 °C.

3. Procédé selon la revendication 1 ou 2,
**caractérisé en ce que**
l'opération d'oxydation ou l'opération de passivation est exécutée par alimentation de vapeur d'eau.

4. Procédé selon l'une des revendications 1 à 3,
**caractérisé en ce que**
l'opération de recuit est exécutée dans un four à passage continu.

5. Procédé selon l'une des revendications précédentes,
**caractérisé en ce que**
une pièce de stator (10, 17) destinée à guider un flux magnétique est fabriquée en tant que composant (10, 17, 32, 33) pour le capteur de couple, laquelle présente un disque annulaire (18, 19) et une pluralité d'éléments dentés (20, 21) faisant saillie dans la direction axiale à partir du disque annulaire (18, 19) et disposés de manière à être répartis dans la direction circonférentielle du disque annulaire (18, 19).

6. Procédé selon la revendication 5,
**caractérisé en ce que**
un fléchissement des éléments dentés (20, 21) avec un rayon de courbure de 0,8 mm à 2 mm est réalisé lors de la déformation de l'élément de tôle de manière à former la pièce de stator (10, 17).

7. Procédé selon l'une des revendications précédentes,
**caractérisé en ce que**
un guide de flux (32, 33) est fabriqué en tant que composant (10, 17, 32, 33) pour le capteur de couple, pour guider un flux magnétique d'une pièce de stator (10, 17) vers un capteur magnétique (27) .

8. Capteur de couple destiné à détecter un couple de rotation appliqué à un arbre de direction d'un véhicule automobile, comprenant au moins une pièce de stator ferromagnétique (10, 17) conçue pour guider un flux magnétique à partir d'un aimant vers au moins un guide de flux (32, 33) du capteur de couple et ainsi vers au moins un capteur magnétique (27),
**caractérisé en ce que**
la pièce de stator (10, 17) et/ou le guide de flux (32, 33) sont constitués d'une tôle électrique recuite conformément à l'opération de déformation et l'opération de recuit selon l'une des revendications 1 à 7.
